(19) Europäisches Patentamt
European Patent Office
Office européen des brevets

(11) **EP 4 015 987 B1**

(12) **EUROPEAN PATENT SPECIFICATION**

(45) Date of publication and mention
of the grant of the patent:
**01.11.2023  Bulletin 2023/44**

(51) International Patent Classification (IPC):
*G01B 11/06* (2006.01)    *G01B 11/26* (2006.01)
*B23K 26/03* (2006.01)    *B22F 10/25* (2021.01)
*B22F 10/38* (2021.01)    *B22F 12/90* (2021.01)
*B23K 26/34* (2014.01)    *B33Y 50/02* (2015.01)

(21) Application number: **20383119.3**

(22) Date of filing: **18.12.2020**

(52) Cooperative Patent Classification (CPC):
**G01B 11/0608; B22F 10/25; B22F 10/38;
B22F 12/90; B23K 26/0006; B23K 26/032;
B23K 26/34; B33Y 50/02; G01B 11/26;** Y02P 10/25

(54) **HEIGHT MEASURING SYSTEM IN LASER METAL DEPOSITIONS AND CORRESPONDING MEASURING METHOD**

HÖHENMESSSYSTEM IN LASER-METALLABSCHEIDUNGEN UND ENTSPRECHENDES MESSVERFAHREN

SYSTÈME DE MESURE DE HAUTEUR DANS LES DÉPÔTS MÉTALLIQUES AU LASER ET MÉTHODE DE MESURE CORRESPONDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.06.2022  Bulletin 2022/25**

(73) Proprietor: **LORTEK S. COOP.**
**20240 Ordizia (Gipuzkoa) (ES)**

(72) Inventors:
• **GARCÍA DE LA YEDRA BASURTO, Aitor**
**20240 Ordizia (Gipuzkoa) (ES)**
• **PEREIRA FALCON, Juan, Carlos**
**20240 Ordizia (Gipuzkoa) (ES)**
• **BOROVKOV, Herman**
**20240 Ordizia (Gipuzkoa) (ES)**

(74) Representative: **Igartua, Ismael**
**Galbaian S. Coop.
Garaia Parke Teknologikoa
Goiru Kalea 1
20500 Arrasate-Mondragón (ES)**

(56) References cited:
**WO-A1-2020/095454    WO-A1-2020/167670
US-A- 6 154 279**

## Description

The present invention refers to a measuring system and measuring procedure for obtaining simultaneously heights of a clad formed by laser metal deposition and its contact angle.

## Background of the invention

Control of the deposit layer thickness and height is a critical issue since it impacts on the quality and geometrical accuracy of the product. For this, an online feedback height control of the laser metal deposition "LMD" with proper sensor strategies is required. Harsh environmental conditions of LMD, high temperature, and reduced spaces in some cases, dictate the usage of non-contact measuring techniques and optical techniques are considered the most suitable ones.

Various approaches for height monitoring systems in the LMD process have been reported in literature: charged couple device (CCD) cameras, laser triangulation displacement sensors, stigmometer, structured light 3D imaging, optical coherence tomography (OCT), and other.

Laser triangulation displacement sensors: this is a well-known technique, however, it requires an additional system to the laser head and off-line measurements, that is, the process is stopped to scan the whole area for a number of selected layers; resulting in productivity losses and does not guarantee a continuous real-time in line monitoring. Also, in laser triangulation system occlusion can occur on projected or reflected beam path due to blocking by deposit geometrical features and result in loss of accuracy by the shading effect.

Optical Coherence Tomography, OCT, is coaxial method and no shading occurs.

Disadvantageously, OCT operates point by point only (an scanner is required). Furthermore, OCT is more expensive than CCD or laser triangulation systems. The interaction of powder feeding with the measuring system may also produce non-controllable noise in the OCT signal, resulting in poor quality results (scattering).

With respect to the wetting of surfaces by liquids, this is measured by the contact angle, θ. That is the angle that a droplet of metal makes at the point which it makes contact with the surface. This provides information regarding the surface tension and consequently the wetting capacity of the surface. This is of special relevance in cladding processes as poor wettability may lead to undesirable phenomena. The most common method in welding and additive manufacturing technologies relies on macroscopic imaging of cross-sections and further image processing to measure the contact angle. This is carried out once the sample has been manufactured and this obviously does not allow any feedback during the process that may be used as an input for any controller.

WO 2020/167670 A1 discloses a measuring system for obtaining heights of a clad formed by laser metal deposition, comprising a narrow band light source for projecting a light line pattern on the deposited material of the clad, a camera for capturing an image of the distorted projected line of light and a computing means adapted to obtain a height of the clad based on the analysis of the captured image.

## Description of the invention

The present invention refers to a measuring procedure and a measuring system for both heights of a clad formed by laser metal deposition and its contact angle. The technique is based on shape-from-shadow through an off-axis, continuous, complimentary measuring system and a lateral camera for contact angle measurement.

The proposed measuring approach according to the present invention has the same advantages as the known triangulation system but unlike in the mentioned technique, the proposed approach can be used on-line with no need of production stops and measurement are carried out just after solidification. Besides, the proposed technique also permits not only measuring the height but also studying melt-pool dynamics, and the contact angle variation. Therefore, the proposed approach offers complementary features with respects to triangulation and OCT. Furthermore, the current invention can lead to reduction of time to fabricate a LMD part, ensure the near-net-shape fabrication, enable closed-loop height control and reduce the man-hour by saving labor. Also, the proposed measuring system can be used for laser welding, laser cladding, and arc welding and wide arc additive manufacturing.

Hence in one aspect, the present invention relates to a measuring system for obtaining heights of a clad formed by laser metal deposition, LMD, the clad comprising a deposited material and a melt pool. The system comprises a narrow band light source configured to project a shadow pattern projection defining a laser-shadow plane on the deposited material of the clad, wherein the projected shadow distorts due to the deposited material of the clad. The system also comprises a first camera configured to capture the distorted projected shadow on the deposited material of the clad, computing means comprising a processing unit storing image processing instructions to obtain a distance $d$ between a top of the deposited material of the clad and the axis of the first camera (5) from the captured image, and arithmetic instructions to obtain a first clad:

$$h = d \,/\, sin\, \theta,$$

wherein $\theta$ is the angle between the laser-shadow plane of the shadow pattern projection and the axis of the first camera.

In a second aspect, the present invention relates to a method for obtaining the contact angle between the surface and the metal droplet. The systems comprises the same narrow band light source as for the clad height measurement together with a second camera. This second camera, synchronized with the former, captures images of the metal droplet from lateral view. This also includes computing means comprising a processing unit storing and image processing instructions to obtain the angle $\theta$ that forms the surface with respect to droplet tangent line.

**Brief description of the drawings**

For a better understanding the above explanation and for the sole purpose of providing an example, some non-limiting drawings are included that schematically depict a practical embodiment.

Figure 1 shows a measuring system according to the present invention.
Figure 2 shows images captured by the height measuring camera and the melt pool lateral camera.
Figure 3 shows the geometrical arrangement of the measuring system (100).
Figure 4 shows the image processing procedure performed in captured pictures.

**Description of a preferred embodiment**

The proposed measurement technique carried out by a proposed measuring system according to the present invention is an active triangulation technique for 3D geometry measurement. In particular the proposed technique can measure a height of a LMD deposit, wherein a shadow pattern is projected instead of light. Thus, depending on the height of the LMD deposit, the projected shadow will distort correspondingly. Furthermore, image capturing by a CCD camera of the distorted projected shadow can be performed before an image processing step for extracting the LMD deposit height.

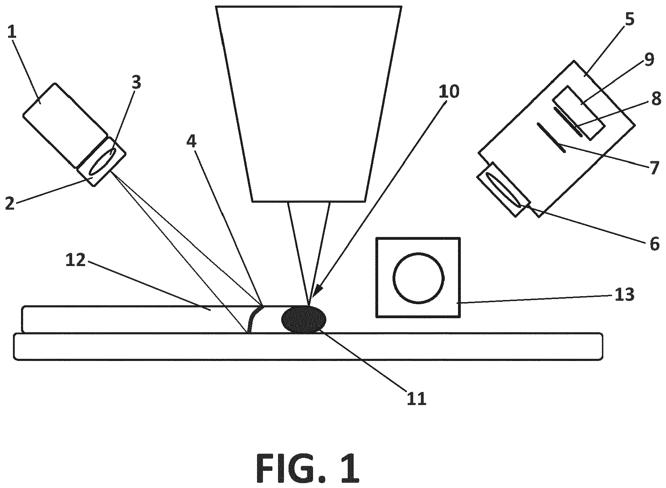

An example of a proposed measuring system (100) according to the present invention is show in figure 1. Figure 1 shows the measuring system (100) that comprises a narrow band light source (1) which comprises a mask (2) and lens (3) for shadow pattern projection (4).

The narrow band light source (1) is a pulsed laser with a capability to emit short pulses ($\mu$s range) of spectrally and spatially coherent light at certain wavelength in visible range (640nm in the current embodiment of figure 1). For this particular embodiment, a pulsed diode laser was used with 640nm wavelength (visible red), output power 300W, pulse duration 10 ns -10 $\mu$s and frequency up to 100 kHz. A single line pattern was chosen for shadow pattern projection (4).

The divergent output laser beam was focused down on the clad with resultant light spot 4x4mm with a shadow line width ~400$\mu$m.

The mask (2) is transparent for the light source (1) and includes introduced non-transparent single or multiple line pattern generation features. The shadow pattern projection (4) falling on deposited material (12) will distort correspondingly and the images acquired by the CCD camera are processed and height data is extracted. The lens (3) is a lens configured to focus emitted light from the light source (1) and the shadow pattern projection (4).

The measuring system (100) comprises a synchronized height measuring camera (5) that comprises a lens (6), an optical filter (7), a camera CCD (Charged Couple Device) imaging unit (8), and a video signal processing unit (9).

The height measuring camera (5) which is the imaging device in the embodiment is configured to include a lens (6), an optical filter (7), a camera CCD (Charged Couple Device) imaging unit (8), and a video signal processing unit (9). The height measuring camera (5) is positioned at the given angle to the working scene for triangulation. The lens (6) is a lens configured to focus a captured image on the CCD imaging unit (8). The optical filter (7) is a filter which transmits only the visible light in a wavelength band of the light source (1) to filter out a process light emission (10) of the cladding head and a stray light.

The CCD imaging unit (8) senses a range of light from the shapes of the clad that comprises a melt pool (11) zone and a deposited material (12) zone and converts these into electric signals.

The video signal processing unit (9) performs calculation processing on the electric signals inputted from the CCD imaging unit (8), the calculation processing performed to clearly display, on one screen, an image in a working scene set in the center of the screen, from a low luminance portion to a high luminance portion.

For this particular embodiment, the images were captured with CCD camera with 656 x 494 pixels resolution, 90 frames per second, dynamic range 54 dB with focusing optics and narrowband filter.

Furthermore, the measuring system (100) comprises a melt pool lateral camera (13). The melt pool lateral camera (13) has the same configuration and is synchronized with the light source (1) as the height measuring camera (5), but it is positioned laterally to monitor the melt pool (11) contact angle variation.

The measuring system (100) comprises a computer connected to the cameras (5, 13) and the narrow band light source (1) with the image processing and light source control software.

In one example, the measurement approach consists in simultaneous in-line monitoring of the melt pool (11) dynamics, measurement of its contact angle and a measurement of the height of just solidified deposited material (12) in laser welding, laser cladding, laser metal deposition, arc welding and wide arc additive manufacturing.

The resolution and the size of the working area in the deposited material (12) of the clad being captured are determined by the cameras resolution and lenses used. The distance from light source to the clad working area and from cameras to the clad working area depends on lenses used. The non-transparent single or multiple line pattern generation features may have different dimensions and geometries depending on the process requirements.

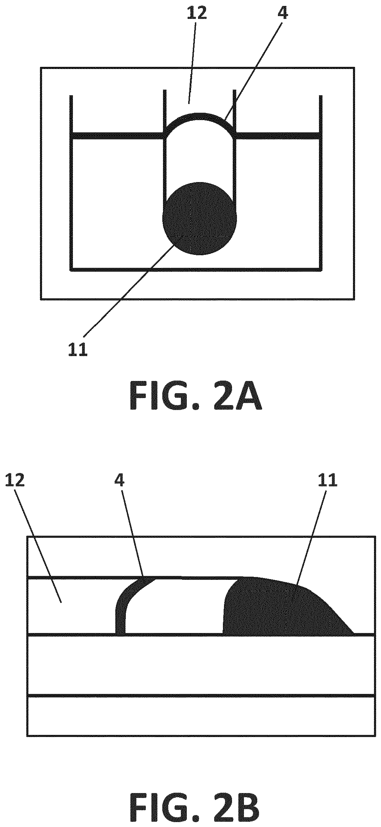

The images captured by both the height measuring camera (5) and melt pool lateral camera (13) are depicted on Fig. 2. In particular, figure 2A shows a clad image (a) captured by the height measuring camera (15) wherein the shadow pattern projection (4) is projected on the deposited material (12) and the melt pool (11) is shown. Figure 2B shows a clad image (b) captured by the melt pool lateral camera (13) wherein the shadow pattern projection (4) is projected on the deposited material (12) and the melt pool (11) as well as the powder flow are also shown.

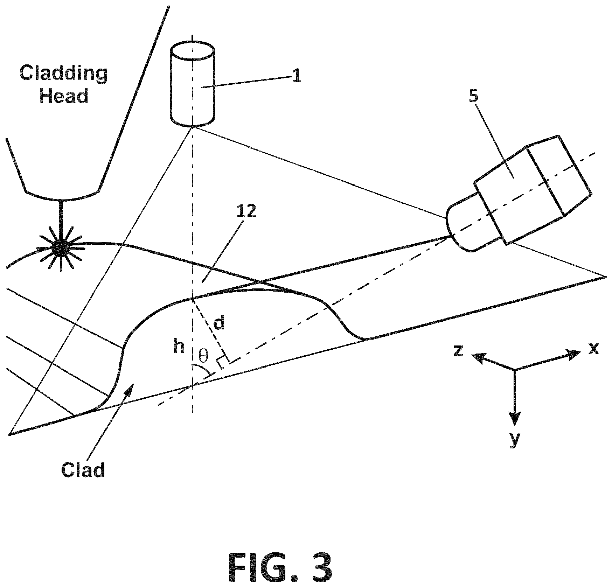

Figure 3 shows the geometrical arrangement of the measuring system (100).

The clad, i.e. the LMD deposit having a deposited material (12) has a height $h$ which appears as distance $d$ in the camera images obtained by the height measuring camera (5) and it is related to the clad height $h$ through:

$$h = d / sin\, \theta$$

where $\theta$ is the angle between the laser-shadow plane of the light source (1) and the axis of the height measuring camera (5).

Preferably, to obtain more accurate values of clad height one must convert number of pixels received by the CCD camera to $\mu$m. The conversion coefficient was found empirically $k$ = 9.86336. Thus, a second clad height can be

$$H = h \cdot k$$

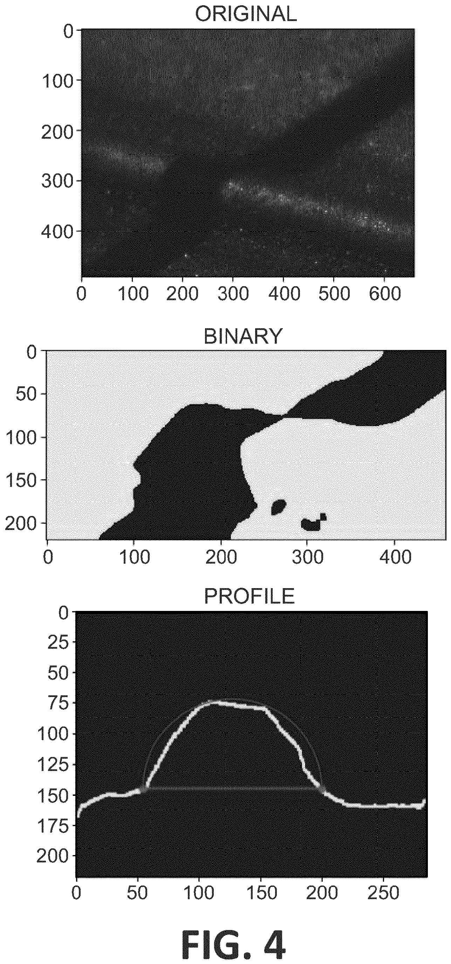

Single track off-line height measurement by means of shape from shadow and some of the image processing steps are shown in Figure 4.

Figure 4 shows the image processing procedure performed in the captured pictures to obtain the height of the clad. Image "ORIGINAL" is the original picture obtained by the height measuring camera (5) configured to capture the distorted projected shadow on the deposited material (12) of the clad.

Then, the image processing software of the measuring system (100) performs image processing consisting of cropping, thresholding, denoising, closing and binarization techniques can be used to enable edge detection in the captured figure as shown in image "BINARY".

Furthermore, sobel edge detection algorithm and B-spline interpolation can be used to acquire deposited track profile and profile acquisition in image "PROFILE" to obtain the heights $h$ and $H$.

## Claims

1. A measuring system (100) for obtaining heights of a clad formed by laser metal deposition, LMD, the clad comprising a deposited material (12) and a melt pool (11), the system comprises:

   - a narrow band light source (1) configured to project a shadow pattern projection (4) defining a laser-shadow plane on the deposited material (12) of the clad, wherein the projected shadow distorts due to the deposited material (12) of the clad;
   - a first camera (5) configured to image capture the distorted projected shadow on the deposited material (12) of the clad; and
   - computing means comprising a processing unit storing:

      image processing instructions to obtain a distance d between a top of the deposited material (12) of the clad and the axis of the first camera (5) from the captured image; arithmetic instructions to obtain a first clad height $h$, wherein $h = d / sin\, \theta$, and wherein $\theta$ is the angle between the laser-shadow plane of the shadow pattern projection (4) and the axis of the first camera (5).

2. The measuring system (100) according to claim 1, further comprising second camera (13) for image capturing melt pool (11) of the clad, wherein the processing unit stores instructions to obtain a contact angle of the melt pool (11) with respect to the substrate based on the captured images..

3. The measuring system (100) according to claims 1 or 2, wherein the processing unit further stores arithmetic instructions to obtain a second clad height $H$, wherein

$$H = h \cdot k$$

wherein $K$ is a first camera (5) pixel coefficient.

4. The measuring system (100) according to previous claims, wherein the first camera (5) comprises:

   a lens (6),
   an optical filter (7),
   a camera CCD (Charged Couple Device) imaging unit (8), and
   a video signal processing unit (9),

5. A method for obtaining heights of a clad formed by laser metal deposition, LMD, the clad comprising a deposited material (12) and a melt pool (11), the method comprising:

- projecting a shadow pattern projection (4) defining a laser-shadow plane on the deposited material (12) of the clad, wherein the projected shadow distorts due to the deposited material (12) of the clad;
- image capturing the distorted projected shadow on the deposited material (12) of the clad;
- obtaining a distance $d$ between a top of the deposited material (12) of the clad and the axis of the first camera (5) based on the processing of the captured image; and
- obtaining a first clad height $h = d \, / \, sin \, \theta$,

wherein $\theta$ is the angle between the laser-shadow plane of the shadow pattern projection (4) and the axis of the first camera (5).

6. The method for obtaining heights of a clad formed by laser metal deposition, LMD, according to previous claim, according to claim 5, further comprising:

- obtaining a second clad height $H = h \cdot k$

wherein K is a first camera (5) pixel coefficient.

7. The method for obtaining heights of a clad formed by laser metal deposition, LMD, according to previous claims 5 or 6, further comprising:

image capturing the melt pool (11) of the clad; and
obtaining a contact angle of the melt pool (11) of the clad with respect to the substrate

**Patentansprüche**

1. Messsystem (100) zur Ermittlung von Höhen einer durch Laser-Metallabscheidung (LMD) gebildeten Beschichtung, wobei die Beschichtung ein abgeschiedenes Material (12) und ein Schmelzbad (11) umfasst, wobei das System Folgendes umfasst:

- eine Schmalband-Lichtquelle (1), die zur Erzeugung einer Schattenmusterprojektion (4) zur Bildung einer Laserschattenfläche auf dem abgeschiedenen Material (12) der Beschichtung ausgelegt ist, wobei der projizierte Schatten bedingt durch das abgeschiedene Material (12) der Beschichtung verzerrt ist;
- eine erste Kamera (5), die zur Bilderfassung des auf das abgeschiedene Material (12) der Beschichtung projizierten verzerrten Schattens ausgelegt ist; und
- eine Recheneinrichtung mit einer Verarbeitungseinheit, die Folgendes eingespeichert enthält:

Bildverarbeitungsbefehle, um aus dem aufgenommenen Bild einen Abstand $d$ zwischen der Oberseite des abgeschiedenen Materials (12) der Beschichtung und der Achse der ersten Kamera (5) zu ermitteln; Rechenbefehle zur Ermittlung einer ersten Beschichtungshöhe $h$,
wobei $h = d/sin \, \theta$, und
wobei $\theta$ der Winkel zwischen der Laserschattenfläche der Schattenmusterprojektion (4) und der Achse der ersten Kamera (5) ist.

2. Messsystem (100) nach Anspruch 1, das ferner eine zweite Kamera (13) zur Bilderfassung des Schmelzbades (11) der Beschichtung umfasst, wobei die Verarbeitungseinheit Befehle zur Ermittlung eines Kontaktwinkels zwischen Schmelzbad (11) und Trägermaterial anhand der erfassten Bilder eingespeichert enthält.

3. Messsystem (100) nach Anspruch 1 oder 2, wobei die Verarbeitungseinheit ferner Rechenbefehle zur Ermittlung einer zweiten Beschichtungshöhe $H$ eingespeichert enthält, wobei

$$H = h \cdot k$$

wobei $K$ ein Pixelkoeffizient der ersten Kamera (5) ist.

4. Messsystem (100) nach den vorstehenden Ansprüchen, wobei die erste Kamera (5) Folgendes umfasst:

ein Objektiv (6),
ein optisches Filter (7),
Eine CCD (Charge Coupled Device)-Kamerabildgebungseinheit (8) und
eine Videosignalverarbeitungseinheit (9),

5. Verfahren zur Ermittlung von Höhen einer durch Laser-Metallabscheidung (LMD) gebildeten Beschichtung, wobei die Beschichtung ein abgeschiedenes Material (12) und ein Schmelzbad (11) umfasst, wobei das Verfahren Folgendes umfasst:

- Erzeugung einer Schattenmusterprojektion (4) zur Bildung einer Laserschattenfläche auf dem abgeschiedenen Material (12) der Beschichtung, wobei der projizierte Schatten bedingt durch das abgeschiedene Material (12) der Beschichtung verzerrt ist;
- Bilderfassung des auf das abgeschiedene Material (12) der Beschichtung projizierten verzerrten Schattens;
- Ermittlung eines Abstands **d** zwischen der Oberseite des abgeschiedenen Materials (12) der Beschichtung und der Achse der ersten Kamera (5) anhand der Verarbeitung des aufgenommenen Bildes; und
- Ermittlung einer ersten Beschichtungshöhe **h = d/sin** $\theta$,

wobei $\theta$ der Winkel zwischen der Laserschattenfläche der Schattenmusterprojektion (4) und der Achse der ersten Kamera (5) ist.

6. Verfahren zur Ermittlung von Höhen einer durch Laser-Metallabscheidung (LMD) gebildeten Beschichtung nach vorstehendem Anspruch, nach Anspruch 5, das ferner Folgendes umfasst:

- Ermittlung einer zweiten Beschichtungshöhe **H = h · k**

wobei **K** ein Pixelkoeffizient der ersten Kamera (5) ist.

7. Verfahren zur Ermittlung von Höhen einer durch Laser-Metallabscheidung (LMD) gebildeten Beschichtung nach den vorstehenden Ansprüchen 5 oder 6, das ferner Folgendes umfasst:

Bilderfassung des Schmelzbades (11) der Beschichtung; und
Ermittlung eines Kontaktwinkels zwischen Schmelzbad (11) der Beschichtung und Trägermaterial.

**Revendications**

1. Système de mesure (100) pour obtenir des hauteurs d'un revêtement formé par dépôt métallique au laser, LMD, le revêtement comprenant un matériau déposé (12) et un bain fondu (11), le système comprend :

- une source de lumière à bande étroite (1) configurée pour projeter une projection de motif d'ombre (4) définissant un plan d'ombre de laser sur le matériau déposé (12) du revêtement, dans lequel l'ombre projetée se déforme dû au matériau déposé (12) du revêtement ;
- une première caméra (5) configurée pour capturer des images de l'ombre projetée déformée sur le matériau déposé (12) du revêtement ; et
- des moyens de calcul comprenant une unité de traitement stockant :

des instructions de traitement d'image pour obtenir une distance d entre une partie supérieure du matériau déposé (12) du revêtement et l'axe de la première caméra (5) à partir de l'image capturée ;
des instructions arithmétiques pour obtenir une première hauteur de revêtement **h,**
dans lequel **h = d/sin** $\theta$, et
où $\theta$ est l'angle entre le plan d'ombre de laser de la projection de motif d'ombre (4) et l'axe de la première caméra (5).

2. Système de mesure (100) selon la revendication 1, comprenant en outre une deuxième caméra (13) pour capturer des images du bain fondu (11) du revêtement, dans lequel l'unité de traitement stocke des instructions pour obtenir un angle de contact du bain fondu (11) par rapport au substrat sur la base des images capturées.

3. Système de mesure (100) selon les revendications 1 ou 2, dans lequel l'unité de traitement stocke en outre des instructions arithmétiques pour obtenir une deuxième hauteur de revêtement **H,** dans lequel

$$H = h \cdot k$$

où **K** est un coefficient de pixel de la première caméra (5).

4. Système de mesure (100) selon les revendications précédentes, dans lequel la première caméra (5) comprend :

une lentille (6),
un filtre optique (7),
une unité d'imagerie de caméra CCD (dispositif à couplage de charge) (8), et
une unité de traitement de signal de vidéo (9),

5. Méthode pour obtenir des hauteurs d'un revêtement formé par dépôt métallique au laser, LMD, le revêtement comprenant un matériau déposé (12) et un bain fondu (11), la méthode comprenant :

- projeter une projection de motif d'ombre (4) définissant un plan d'ombre de laser sur le matériau déposé (12) du revêtement, dans lequel l'ombre projetée se déforme dû au matériau déposé (12) du revêtement ;
- capturer des images de l'ombre projetée déformée sur le matériau déposé (12) du revêtement ;
- obtenir une distance d entre une partie supérieure du matériau déposé (12) du revêtement et l'axe de la première caméra (5) sur la base du traitement de l'image capturée ; et

- obtenir une première hauteur de revêtement $h = d/sin\ \theta$,

où $\theta$ est l'angle entre le plan d'ombre de laser de la projection de motif d'ombre (4) et l'axe de la première caméra (5).

6. Méthode pour obtenir des hauteurs d'un revêtement formé par dépôt métallique au laser, LMD, selon la revendication précédente, selon la revendication 5, comprenant en outre :

- obtenir une deuxième hauteur de revêtement $H = h \cdot k$

où K est un coefficient de pixel de la première caméra (5).

7. Méthode pour obtenir des hauteurs d'un revêtement formé par dépôt métallique au laser, LMD, selon les revendications précédentes 5 ou 6, comprenant en outre :

capturer des images du bain fondu (11) du revêtement ; et
obtenir un angle de contact du bain fondu (11) du revêtement par rapport au substrat.

# FIG. 1

FIG. 2A

FIG. 2B

**Cladding Head**

1

5

12

d

h θ

Clad

z x

y

**FIG. 3**

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020167670 A1